# EUROPÄISCHE PATENTSCHRIFT

(11) **EP 1 066 105 B1**
(45) Veröffentlichungstag und Bekanntmachung des Hinweises auf die Patenterteilung: **05.03.2003**
(21) Anmeldenummer: 99922043.7
(22) Anmeldetag: 18.03.1999
(51) Int. Cl.: B01D 53/94, F01N 3/20, F01N 3/02

(54) **ABGASSYSTEM EINES VERBRENNUNGSMOTORS SOWIE VERFAHREN ZUR REDUKTION VON SCHADSTOFFEN IN EINEM ABGAS**
INTERNAL COMBUSTION ENGINE EXHAUST SYSTEM AND METHOD FOR REDUCING CONTAMINANTS IN EXHAUST GASES
SYSTEME D'ECHAPPEMENT D'UN MOTEUR A COMBUSTION INTERNE ET PROCEDE DE REDUCTION DES POLLUANTS CONTENUS DANS LES GAZ D'ECHAPPEMENT

(30) Priorität: 27.03.1998 DE 19813723
(43) Veröffentlichungstag der Anmeldung: 10.01.2001
(73) Patentinhaber: SIEMENS AKTIENGESELLSCHAFT, 80333 München (DE)
(72) Erfinder: NEUFERT, Ronald, D-96247 Michelau (DE)
(86) Internationale Anmeldenummer: DE9900769
(87) Internationale Veröffentlichungsnummer: WO99049958

(56) Entgegenhaltungen:
- DE-A- 3 002 871
- US-A- 5 121 602
- US-A- 5 189 878
- PATENT ABSTRACTS OF JAPAN vol. 096, no. 007, 31. Juli 1996 (1996-07-31) & JP 08 057258 A (BABCOCK HITACHI KK), 5. März 1996 (1996-03-05)
- PATENT ABSTRACTS OF JAPAN vol. 017, no. 285 (C-1066), 2. Juni 1993 (1993-06-02) & JP 05 015739 A (SEKIYU SANGIYOU KATSUSEIKA SENTAA;OTHERS: 02), 26. Januar 1993 (1993-01-26)
- PATENT ABSTRACTS OF JAPAN vol. 013, no. 399 (C-632), 5. September 1989 (1989-09-05) & JP 01 143631 A (BABCOCK HITACHI KK), 6. Juni 1989 (1989-06-06)

## Beschreibung

Die Erfindung betrifft ein Abgassystem eines Verbrennungsmotors, insbesondere eines Dieselmotors, mit einer Abgasieitung und einer mit der Abgasleitung verbundenen Einrichtung zur Reinigung des Abgases des Verbrennungsmotors. Die Erfindung betrifft weiterhin ein Verfahren zur Reduktion von Schadstoffen im Abgas eines Verbrennungsmotors, insbesondere eines Dieselmotors.

In der EP 0 577 853 B1 ist eine Einrichtung zur Entstikkung von Abgas eines Verbrennungsmotors, insbesondere eines Dieselmotors, mit einer Abgasleitung, einem an der Abgasleitung angeschlossenen DeNOₓ-Katalysator, einem Vorratsbehälter für ein zumindest teilweise in Ammoniak umwandelbares Reduktionsmittel, einem dem DeNOₓ-Katalysator vorgeschalteten Ammoniakgenerator und eine Einrichtung zur Einbringung des Reduktionsmittels in das dem DeNOₓ-Katalysator zuströmende Abgas beschrieben. In dem DeNOₓ-Katalysator findet eine selektive katalytische Reduktion (SCR) mit Ammoniak als Reduktionsmittel der Stickoxide zu Stickstoff statt. Der Ammoniak kann hierbei aus einer ungiftigen Vorläufer-Substanz, wie beispielsweise Harnstoff, erzeugt werden. Aus einer wäßrigen Harnstofflösung entsteht in einem solchen Fall durch Hydrolyse der zur SCR-Reaktion verwendete Ammoniak. Die Hydrolyse kann durch direktes Einspritzen einer wäßrigen Harnstofflösung in das heiße Abgas oder durch die Kontaktierung der wäßrigen Harnstofflösung mit einem Hydrolysekatalysator erfolgen. Es kann hierbei eine 20 bis 60%ige wäßrige Harnstofflösung zur Anwendung kommen. Weiter ist aus der DE 30 02 871 A1 ein Abgassystem eines Dieselmotors bekannt, bei dem eine Abgasleitung und eine damit verbundene Einrichtung zur Reinigung des Abgases des Dieselmotors vorgesehen sind. Weiter ist ein Kondenswassersammler vorgesehen, welcher der Einrichtung vorgeschaltet und strömungstechnisch mit der Abgasleitung verbunden ist. Die Reinigungseinrichtung ist dabei als ein Sorptionsfilter ausgebildet. Ebenso ist aus der DE 30 02 871 A1 ein entsprechendes Verfahren zur Reinigung der Abgase eines Dieselmotors bekannt.

Aufgabe der Erfindung ist es, ein Abgassystem eines Verbrennungsmotors mit einer besonders kompakten Einrichtung zur Reinigung des Abgases des Verbrennungsmotors anzugeben. Eine weitere Aufgabe der Erfindung besteht darin, ein effektiv arbeitendes und kostengünstiges Verfahren zur Reduktion von Schadstoffen im Abgas des Verbrennungsmotors anzugeben, bei dem das Abgas über eine Abgasleitung einer Einrichtung zur Reinigung des Abgases zugeleitet wird.

Erfindungsgemäß wird die auf ein Abgassystem eines Verbrennungsmotors, insbesondere eines Dieselmotors, gerichtete Aufgabe dadurch gelöst, daß der Kondenswassersammler mit einem Wasservorratsbehälter verbunden ist, und der Wasservorratsbehälter strömungstechnisch mit einem Speicher für Reduktionsmittel für einen Katalysator verbunden ist.

Die Erfindung geht hierbei von der Erkenntnis aus, daß ein Abgassystem bei einem Kaltstart des Verbrennungsmotors, vor allem im Winter, durch Kondensation von Wasser aus dem Abgas belastet wird. Das Wasser, welches in einer Abgasleitung geführt ist, kann dabei vor Eintritt in eine Einrichtung zur Reinigung des Abgases kondensieren, wobei das kondensierte Wasser durch die Einrichtung, insbesondere einen Katalysator, geschleust wird und dort zu einer Behinderung der katalytischen Reaktion führt. Weiterhin können durch kondensiertes Wasser Katalysatorgifte in das Porensystem eines Katalysators tief eindringen und ihn teilweise desaktivieren. Das kondensierte Wasser läßt sich jedoch nutzen, indem es als Lösungsmittel für ein Reduktionsmittel, wie z.B. Ammoniak, verwendet wird. Auf diese Weise verringert sich der notwendige Vorrat an Lösungsmittel. Die Aufbereitung der Reduktionsmittellösung kann bei Bedarf mit Kondenswasser erfolgen.

Die strömungstechnische Verbindung ist beispielsweise über eine Abführung für Kondenswasser mit oder ohne eine entsprechende Reinigungsvorrichtung herstellbar. In dem Wasservorratsbehälter kann eine hinreichende Menge an Kondenswasser vorgehalten werden, welche selbstverständlich auch für andere Einsatzgebiete bei einem Fahrzeug mit einem Verbrennungsmotor zusätzlich benutzt werden kann. Beispielsweise könnte das Kondenswasser zusätzlich für eine Waschanlage einer Windschutzscheibe, eines Scheinwerfers, eines Rücklichtes oder anderer Teile eines Kraftfahrzeugs verwendet werden.

Das Reduktionsmittel kann beispielsweise im festen Zustand vorgehalten werden und durch das Kondenswasser in eine wäßrige Lösung gebracht und diese wäßrige Lösung zum Zwecke der Reduktion von beispielsweise Stickoxiden der Einrichtung zur Reinigung des Abgases zugeführt werden. Dies ermöglicht auch eine besonders kompakte Ausgestaltung des Abgassystems, da sowohl der Speicher für das Reduktionsmittel als auch der Wasservorratsbehälter klein ausgeführt sein können. Gegenüber einer Vorratshaltung des Reduktionsmittels bereits in einer wäßrigen Lösung ist somit eine erhebliche Platzeinsparung erreichbar.

Bei einem Katalysator, z.B. einem Oxidations- oder Reduktionskatalysator, werden durch einen Kondenswassersammler Auswaschungen von Aktivkomponenten des Katalysators und eine Desaktivierung des Katalysators durch im Abgas enthaltene Schwermetalle, Phosphor- und Siliziumverbindungen, z.B. aus Schmierölzusätzen, durch Entfernen eines Großteils des beim Kaltstart entstehenden Kondenswassers vor dem eigentlichen Katalysatorsystem verhindert. Dies ist insbesondere bei Personenkraftwagen von besonderem Interesse, da die Anzahl der Kaltstartvorgänge im Kurzstreckenverkehr anteilig sehr groß und die zu erwartenden Desaktivierungsvorgänge entsprechend gravierend sein können. Besonders geeignet ist daher das Abgassystem für einen Einsatz bei Dieselmotoren für Personenkraftwagen.

Vorzugsweise ist das Abgas aus der Abgasleitung über ein Ventil dem Kondenswassersammler zuführbar. Über das Ventil wird eine strömungstechnische Verbindung zwischen der Abgasleitung und dem Kondenswassersammler hergestellt. Das Ventil kann hierbei als ein Zwei-Wege-Ventil ausgeführt sein, welches in einer Ventilstellung den direkten Weg zur Einrichtung zur Reinigung des Abgases freigibt und in einer zweiten Ventilstellung diesen direkten Weg gerade verschließt und den Weg zu dem Kondenswassersammler freigibt. Es kann auch ein einfaches Ventil verwendet werden, welches beispielsweise nur den direkten Weg verschließt oder aber in dem Weg vor dem Kondenswassersammler angeordnet ist, ohne eine Auswirkung auf den direkten Weg zu haben. Das Ventil ist vorzugsweise schaltbar oder steuerbar. Eine Ansteuerung des Ventils, d.h. ein Öffnen oder ein Schließen des Ventils, erfolgt vorzugsweise in Abhängigkeit des Feuchtegehaltes in dem Abgas, insbesondere während und kurz nach einem Kaltstartvorgang des Verbrennungsmotors. Die Ansteuerung kann hierbei über einen Sensor erfolgen, der geeignet ist für die Erkennung, ob relevante Mengen von kondensiertem Wasser in dem Abgas vorhanden sind. Der Sensor kann ein Feuchtesensor sein, welcher direkt den Wassergehalt in dem Abgas mißt. Er kann auch ein Temperatursensor sein, welcher die Temperatur des Abgases erfaßt und somit den Rückschluß erlaubt, in welcher Größenordnung Wasser in dem Abgas enthalten ist. Ist der Feuchtegehalt in dem Abgas auf einen bestimmten Wert abgesunken, beispielsweise dadurch, daß die Temperatur entsprechend hoch ist, so kann eine Ansteuerung des Ventils derart erfolgen, daß die strömungstechnische Verbindung des Kondenswassersammlers mit der Abgasleitung unterbrochen wird.

Der Kondenswassersammler weist vorzugsweise eine Abführung für kondensiertes Wasser auf. Über eine solche Abführung kann das Kondenswasser beispielsweise direkt in die Umgebung abgelassen werden.

Es ist ebenfalls möglich, daß in der Abführung eine Reinigungsvorrichtung, insbesondere mit einem Filter, vorgesehen ist, durch welche das Kondenswasser für eine Weiterverarbeitung aufbereitet werden kann.

Der Kondenswassersammler weist vorzugsweise ein U-Rohr, eine Kühlfalle, einen Kondensator oder eine ähnliche zur Kondensation und zum Sammeln von Wasserdampf oder bereits kondensiertem Wasser geeignete Einrichtung auf. Ein Kondensator kann hierbei als Rohrkondensator ausgeführt sein, welcher beispielsweise durch den Fahrtwind eines Kraftfahrzeugs, welches durch den Verbrennungsmotor angetrieben wird, gekühlt wird.

Die auf ein Verfahren zur Reduktion von Schadstoffen im Abgas eines Verbrennungsmotors, insbesondere eines Dieselmotors, beispielsweise bei einem PKW gerichtete Aufgabe wird durch ein Verfahren gelöst, bei dem in dem Abgas enthaltenes Wasser kondensiert und zumindest teilweise aus einer Abgasleitung zur Abführung des Abgases entfernt wird, bevor das Abgas über die Abgasleitung einer Einrichtung zur Reinigung des Abgases zugeleitet wird. Erfindungsgemäß wird das kondensierte Wasser in einem Kondenswassersammler gesammelt, und von dort mit einem Reduktionsmittel, insbesondere einem in fester Form vorliegenden Reduktionsmittel (z.B. Harnstoff), zu einer wäßrigen Lösung zusammengeführt, wobei diese Lösung einen Katalysator, insbesondere einem DeNOₓ-Katalysator, zugeführt wird. Die Vorteile eines solchen Verfahrens entsprechen den bereits erwähnten Vorteilen des oben ausgeführten Abgassystems.

Das Abgassystem sowie das Verfahren zur Reduktion von Schadstoffen im Abgas eines Verbrennungsmotors werden beispielhaft anhand der Zeichnung erklärt. Die Figuren sind hierbei teilweise schematisch und nicht maßstäblich, insbesondere in ihrer räumlichen Anordnung, dargestellt. Es zeigen:
- FIG 1: eine schematische Darstellung eines Abgassystems mit einem Kondenswassersammler umfassend ein U-Rohr,
- FIG 2: ein Abgassystem mit einem Kondenswassersammler umfassend einen Kondensator, und
- FIG 3: ein Abgassystem mit einem Kondenswassersammler umfassend eine Kühlfalle.

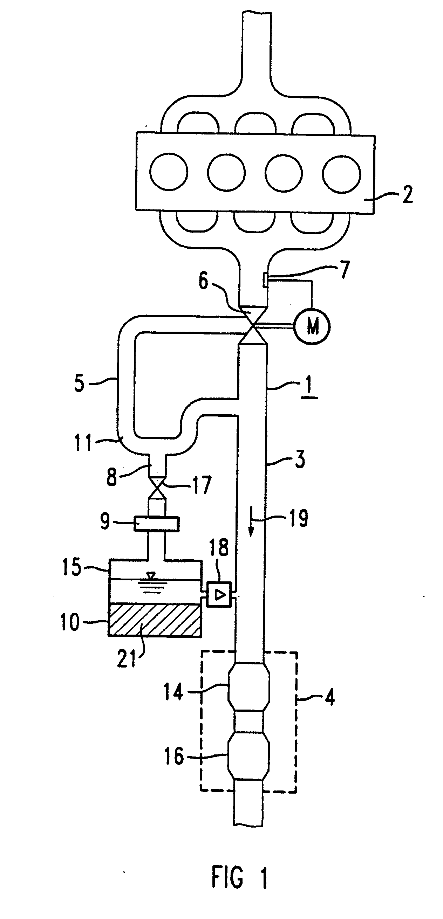

Gleiche Bezugszeichen in den Figuren 1 bis 3 haben jeweils die gleiche Bedeutung.

In Figur 1 ist schematisch ein Abgassystem 1 eines Verbrennungsmotors 2 dargestellt. Das Abgassystem 1 weist eine dem Verbrennungsmotor 2 strömungstechnisch nachgeschaltete Abgasleitung 3 zur Führung von Abgas 19 auf, welche mit einer Einrichtung 4 zur Reinigung des Abgases 19 verbunden ist. In der Abgasleitung 3 ist ein über einen Motor ansteuerbares Ventil 6, insbesondere ein Zwei-Wege-Ventil, angeordnet. Strömungstechnisch vor dem Ventil 6 ist ein Sensor 7 zur Erkennung, ob hinreichend viel Wasser in dem Abgas 19 vorhanden ist, angeordnet. Dieser Sensor 7 ist zur Ansteuerung des Ventils 6 mit dem Motor des Ventils 6 verbunden. Mit dem Ventil 6 ist strömungstechnisch ein Kondenswassersammler 5 verbunden, welcher ein U-Rohr 11 aufweist, welches in die Abgasleitung 3 einmündet. Am geodätisch tiefsten Punkt des U-Rohrs 11 ist eine Abführung 8 für kondensiertes Wasser 23 vorgesehen. In dieser Abführung 8 ist ein Ablaßventil 17 angeordnet, durch welches eine vollständige oder dosierte Abführung des Kondenswassers 23 durchführbar ist. Dem Ablaßventil 17 nachgeschaltet ist eine Reinigungsvorrichtung 9, insbesondere ein Filter zur Reinigung des Kondenswassers 23. Der Reinigungsvorrichtung 9 ist ein Speicher 10 für ein insbesondere festes Reduktionsmittel 21 strömungstechnisch nachgeordnet. Dieser Speicher 10 ist zudem als ein Wasservorratsbehälter 15 ausgebildet, in den das Kondenswasser 23 einströmt. Es bildet sich somit in dem Wasservorratsbehälter 15 eine Lösung des Reduktionsmittels 21 in dem Kondenswasser 23. Der Wasservorratsbehälter 15 ist über eine Dosiereinrichtung 18 mit der Abgasleitung 3 verbunden. Über die Dosiereinrichtung 15 ist somit die Lösung des Reduktionsmittels 21 in dem Kondenswasser 23 in die Abgasleitung 3 und somit in das Abgas 19 einführbar. Stromab der Dosiereinrichtung 18 ist in der Abgasleitung 3 die Einrichtung 4, umfassend einen Katalysator 14, insbesondere einen DeNOₓ-Katalysator, sowie einen optional zusätzlichen Oxidationskatalysator 16, angeordnet. Der Katalysator 14 kann hierbei einen Trägerkörper aus einem Metall, beispielsweise eine Metallfolie oder ein Metallgitter, sowie aus einer Inert- oder Feuerfestkeramik aufweisen, welcher Träger mit einem entsprechenden katalytisch aktiven Material beschichtet ist. Der Katalysator 14 kann selbstverständlich auch vollständig aus dem katalytisch aktiven Material, z.B. als vollextrudierter Wabenkörper, hergestellt sein.

Es versteht sich, daß es ebenfalls möglich ist, den Wasservorratsbehälter 15 räumlich getrennt von dem Speicher 10 für das Reduktionsmittel 21 anzuordnen.

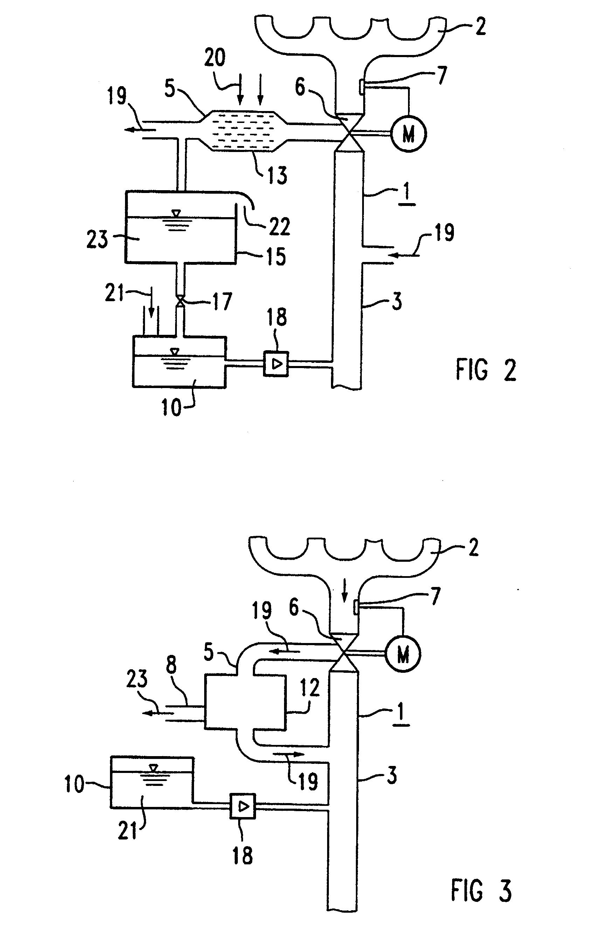

In Figur 2 ist eine alternative Ausführungsform des Kondenswassersammlers 5 dargestellt, welcher einen durch Kühlluft 20, insbesondere Fahrtwind, kühlbarer Kondensator 13 aufweist. Stromab des Kondensators 13 ist der Kondenswassersammler 5 mit einem Wasservorratsbehälter 15 für Kondenswasser 23 verbunden, welcher seinerseits mit einem Speicher 10 für Reduktionsmittel 21 verbunden ist. In dem Speicher 10 ist eine Lösung von Reduktionsmittel 21 in dem Kondenswasser 23 gespeichert, welche über eine Dosiereinrichtung 18 der Abgasleitung 3 zuführbar ist. Dem Speicher 10 kann das Reduktionsmittel 21, beispielsweise Harnstoff, in fester Form zugeführt werden. Von dem Kondensator 13 gelangt das vom Kondenswasser 23 befreite Abgas 19 stromab des Ventils 6 wieder in die Abgasleitung 3 hinein.

In Figur 3 ist eine Ausführungsform des Abgassystems 1 dargestellt, bei der der Kondenswassersammler 5 eine Kühlfalle 12 aufweist. Die Kühlfalle 12 weist eine Abführung 8 für das kondensierte Wasser 23 auf. Das Kondenswasser 23 wird nach Herstellung einer wäßrigen Lösung eines Reduktionsmittels, der Abgasleitung 3 vor der Einrichtung 4 zur Reinigung des Abgases wieder zugeführt. Das von dem Kondenswasser 23 befreite Abgas 19 strömt stromab des Ventils 6 wieder in die Abgasleitung 3 hinein. Weiterhin ist ein Speicher 10 für ein Reduktionsmittel 21 vorgesehen, welcher über eine Dosiereinrichtung 18 mit der Abgasleitung 3 verbunden ist.

Allen drei Ausführungsbeispielen ist gemeinsam, daß insbesondere während eines Kaltstarts des Verbrennungsmotors 2, vorzugsweise eines Dieselmotors eines PKWs, das Wasser enthaltende Abgas 19 einem Kondenswassersammler 5 zugeführt wird. In dem Kondenswassersammler 5 wird ein Großteil des Kondenswassers 23 von dem Abgas 19 getrennt und das so vom Kondenswasser 23 befreite Abgas 19 einer Einrichtung zur Reinigung des Abgases, insbesondere zur Entstikkung des Abgases, zugeleitet. Das Kondenswasser 23 wird nach einer entsprechenden Aufarbeitung, insbesondere durch Herstellung einer wäßrigen Lösung eines Reduktionsmittels, der Abgasleitung 3 vor der Einrichtung 4 zur Reinigung des Abgases wieder zugeführt werden. Hierdurch ist nicht nur die Gefahr der Desaktivierung der Einrichtung zur Reinigung des Abgases entgegengewirkt, sondern durch die Verwendung eines Wasservorratsbehälters 15 für kondensiertes Wasser 23 ist auch eine besonders kompakte Ausführung des gesamten Abgassystems 1 mit einem Speicher 10 für in fester Phase vorliegendes Reduktionsmittel 21 gegeben.

## Patentansprüche

1. Abgassystem (1) eines Verbrennungsmotors (2), insbesondere eines Dieselmotors, mit einer Abgasleitung (3) und einer mit der Abgasleitung (3) verbundenen Einrichtung (4) zur Reinigung des Abgases des Verbrennungsmotors (2), wobei ein Kondenswassersammler (5) vorgesehen ist, welcher der Einrichtung (4) vorgeschaltet und strömungstechnisch mit der Abgasleitung (3) verbunden ist,
**dadurch gekennzeichnet, daß** der Kondenswassersammler (5) mit einem Wasservorratsbehälter (15) verbunden ist, und daß der Wasservorratsbehälter (15) strömungstechnisch mit einem Speicher (10) für Reduktionsmittel (21) für einen Katalysator (14) verbunden ist.

2. Abgassystem (1) nach Anspruch 1, bei der ein, insbesondere steuerbares, Ventil (6) zur Herstellung einer strömungtechnischen Verbindung zwischen Kondenswassersammler (5) und Abgasleitung (3) vorgesehen ist.

3. Abgassystem (1) nach Anspruch 2, bei der ein Sensor (7) zur Erkennung des Vorliegens von Wasser in der Abgasleitung (3) vorgesehen ist, über den eine Ansteuerung des Ventils (6) erfolgt.

4. Abgassystem (1) nach Anspruch 3, bei der der Sensor (7) ein Feuchtesensor oder ein Temperatursensor ist.

5. Abgassystem (1) nach einem der vorhergehenden Ansprüche, bei der in dem Kondenswassersammler (5) ein Abführung (8) für kondensiertes Wasser (23) vorgesehen ist.

6. Abgassystem (1) nach Anspruch 5, bei der in der Abführung (8) eine Reinigungsvorrichtung (9), insbesondere mit einem Filter, vorgesehen ist.

7. Abgassystem (1) nach einem der vorhergehenden Ansprüche, bei der der Kondenswassersammler (5) ein U-Rohr (11) aufweist.

8. Abgassystem (1) nach einem der vorhergehenden Ansprüche, bei der der Kondenswassersammler (5) eine Kühlfalle (12) aufweist.

9. Abgassystem (1) nach einem der vorhergehenden Ansprüche, bei der der Kondenswassersammler (5) einen Kondensator (13) aufweist.

10. Abgassystem (1) nach einem der vorhergehenden Ansprüche, bei dem der Katalysator (14) ein DeNOx-Katalysator ist.

11. Abgassystem (1) nach einem der vorhergehenden Ansprüche, bei dem der Verbrennungsmotor (2) ein Dieselmotor eines Personenkraftwagens ist.

12. Verfahren zur Reduktion von Schadstoffen im Abgas eines Verbrennungsmotors (2), insbesondere eines Dieselmotors, bei dem in dem Abgas enthaltenes Wasser kondensiert und zumindest teilweise aus einer Abgasleitung (3) zur Abführung des Abgases entfernt wird, bevor das Abgas über die Abgasleitung (3) einer Einrichtung (4) zur Reinigung des Abgases zugeleitet wird,
**dadurch gekennzeichnet, daß** das kondensierte Wasser (23) in einem Kondenswassersammler (5) gesammelt, mit einem Reduktionsmittel (21) zu einer wäßrigen Lösung zusammengeführt wird und diese Lösung einem Katalysator, insbesondere einem DeNOₓ-Katalysator (14), zugeführt wird.

## Claims

1. Exhaust system (1) of an internal combustion engine (2), in particular of a diesel engine, having an exhaust pipe (3) and a device (4) which is connected to the exhaust pipe (3) for cleaning the exhaust gas from the internal combustion engine (2), a condensation water collector (5) being provided, which is connected upstream of the device (4) and is flow-connected to the exhaust pipe (3), **characterized in that** the condensation water collector (5) is connected to a water reservoir (15), and **in that** the water reservoir (15) is flow-connected to a store (10) for reducing agent (21) for a catalytic converter (14).

2. Exhaust system (1) according to Claim 1, in which a valve (6), in particular a controllable valve, is provided for producing a flow connection between condensation water collector (5) and exhaust pipe (3).

3. Exhaust system (1) according to Claim 2, in which a sensor (7) for detecting the presence of water in the exhaust pipe (3) is provided, by means of which sensor the valve (6) is actuated.

4. Exhaust system (1) according to Claim 3, in which the sensor (7) is a humidity sensor or a temperature sensor.

5. Exhaust system (1) according to one of the preceding claims, in which an outlet (8) for condensed water (23) is provided in the condensation water collector (5).

6. Exhaust system (1) according to Claim 5, in which a cleaning device (9), in particular with a filter, is provided in the outlet (8).

7. Exhaust system (1) according to one of the preceding claims, in which the condensation water collector (5) has a U-pipe (11).

8. Exhaust system (1) according to one of the preceding claims, in which the condensation water collector (5) has a cold trap (12).

9. Exhaust system (1) according to one of the preceding claims, in which the condensation water collector (5) has a condenser (13).

10. Exhaust system (1) according to one of the preceding claims, in which the catalytic converter (14) is a deNOx catalytic converter.

11. Exhaust system (1) according to one of the preceding claims, in which the internal combustion engine (2) is a diesel engine of a passenger automobile.

12. Method for reducing pollutants in the exhaust gas from an internal combustion engine (2), in particular from a diesel engine, in which water contained in the exhaust gas is condensed and at least partially removed from an exhaust pipe (3) for discharging the exhaust gas before the exhaust gas is fed via the exhaust pipe (3) to a device (4) for cleaning the exhaust gas, **characterized in that** the condensed water (23) is collected in a condensation water collector (5), is combined with a reducing agent (21) to form an aqueous solution and this solution is fed to a catalytic converter, in particular a deNOx catalytic converter (14).

## Revendications

1. Système (1) pour les gaz d'échappement d'un moteur (2) à combustion, notamment d'un moteur diesel, comprenant un conduit (3) pour les gaz d'échappement et un dispositif (4) qui communique avec le conduit (3) pour les gaz d'échappement et qui est destiné à épurer les gaz d'échappement du moteur (2) à combustion interne, dans lequel il est prévu un collecteur (5) d'eau de condensation, qui est monté en amont du dispositif (4) et qui communique du point de vue de la technique des fluides avec le conduit (3) pour les gaz d'échappement,
**caractérisé en ce que** le collecteur (5) d'eau de condensation communique avec un réservoir (15) d'eau et **en ce que** le réservoir (15) d'eau communique du point de vue de la technique des fluides avec une réserve (10) d'agent (21) réducteur pour un pot catalytique (14).

2. Système (1) pour les gaz d'échappement suivant la revendication 1, dans lequel il est prévu une vanne (6) qui peut notamment être commandée et qui est destinée à ménager une communication du point de vue de la technique des fluides entre le collecteur (5) d'eau de condensation et le conduit (3) pour les gaz d'échappement.

3. Système (1) pour les gaz d'échappement suivant la revendication 2, dans lequel il est prévu un capteur (7) qui est destiné à reconnaître la présence d'eau dans le conduit (3) pour les gaz d'échappement et par lequel s'effectue une commande de la vanne (6).

4. Système (1) pour les gaz d'échappement suivant la revendication 3, dans lequel le capteur (7) est un capteur d'humidité ou un capteur de température.

5. Système (1) pour les gaz d'échappement suivant l'une des revendications précédentes, dans lequel il est prévu dans le collecteur (5) d'eau de condensation une évacuation (8) peur de l'eau (23) condensée.

6. Système (1) pour les gaz d'échappement suivant la revendication 5, dans lequel il est prévu dans l'évacuation (8) un dispositif (9) d'épuration ayant notamment un filtre.

7. Système (1) pour les gaz d'échappement suivant l'une des revendications précédentes, dans lequel le collecteur (5) d'eau de condensation comprend un tubs (11) en U.

8. Système (1) pour les gaz d'échappement suivant l'une des revendications précédentes, dans lequel le collecteur (5) d'eau de condensation a un piège (12) à refroidissement.

9. Système (1) pour les gaz d'échappement suivent l'une des revendications précédentes, dans lequel le collecteur (5) d'eau de condensation a un condenseur (13).

10. Système (1) pour les gaz d'échappement suivant l'une des revendications précédentes, dans lequel le pot catalytique (14) est un pot catalytique DeNOx.

11. Système (1) pour les gaz d'échappement suivant l'une des revendications précédentes, dans lequel le moteur (2) à combustion interne est un moteur diesel d'une voiture particulière.

12. Procédé de réduction des substances polluantes des gaz d'échappement d'un moteur (2) à combustion interne, notamment d'un moteur diesel, dans lequel on condense de l'eau contenue dans les gaz d'échappement et on l'élimine au moins en partie d'un conduit (3) pour les gaz d'échappement destiné à l'évacuation des gaz d'échappement avant que les gaz d'échappement ne soient envoyée par l'intermédiaire du conduit (3) pour les gaz d'échappement à un dispositif (4) d'épuration pour les gaz d'échappement,
**caractérisé en ce que** l'on collecte de l'eau (23) condensée dans un collecteur (5) d'eau de condensation, on la réunit à un agent (21) réducteur pour obtenir une solution aqueuse et on envoie cette solution à un pot catalytique, notamment à un pot catalytique (14) DeNOx.
